# EUROPÄISCHE PATENTANMELDUNG

(11) **EP 4 331 905 A1**
(43) Veröffentlichungstag der Anmeldung: **06.03.2024**
(21) Anmeldenummer: 23185998.4
(22) Anmeldetag: 18.07.2023
(51) Int. Cl.: B60L 53/18

(54) **VERFAHREN ZUM LADEN EINES ELEKTROCHEMISCHEN ENERGIESPEICHERS EINES ELEKTRISCH ANTREIBBAREN FAHRZEUGS MIT EINEM INTELLIGENTEN LADEKABEL**

(30) Priorität: 01.08.2022 DE 102022207918
(71) Anmelder: Robert Bosch GmbH, 70442 Stuttgart (DE)
(72) Erfinder: Boronka, Alexander, 74369 Loechgau (DE)

(57) **Zusammenfassung**

Verfahren zum Laden eines elektrochemischen Energiespeichers (201) eines elektrisch antreibbaren Fahrzeugs (200) mit einem intelligenten Ladekabel (203), welches eine Datenerfassung und Konnektivität aufweist, an einer Ladestation (202), wobei ein Nutzer des elektrisch antreibbaren Fahrzeugs eine App (204) des Ladedienstleisters für Ladevorgänge an Ladestationen verwendet, um eine durch den Nutzer mittels der App (204) vorgebbare Zeit (Soll-Zeit) zum Starten und/oder Beenden eines Ladevorgangs an das intelligente Ladekabel (203) zu senden, und in Abhängigkeit eines Vergleichs der durch das intelligente Ladekabel erfassten Zeit während des Ladevorgangs repräsentiert (Ist-Zeit) mit der Soll-Zeit die Ladestation (202) und/oder das elektrisch antreibbare Fahrzeug (200) durch das intelligente Ladekabel (203) zu signalisieren, dass der Ladevorgang beendet ist.

## Beschreibung

Die Erfindung geht aus von einem Verfahren zum Laden eines elektrochemischen Energiespeichers eines elektrisch antreibbaren Fahrzeugs mit einem intelligenten Ladekabel, welches eine Datenerfassung und eine Konnektivität aufweist, an einer Ladestation, wobei ein Nutzer des elektrisch antreibbaren Fahrzeugs eine App eines Ladedienstleisters für Ladevorgänge an Ladestationen verwendet, einem intelligenten Ladekabel zum Laden eines elektrochemischen Energiespeichers sowie einer Verwendung eines Verfahrens zum Laden eines elektrochemischen Energiespeichers gemäß dem Oberbegriff der unabhängigen Ansprüche.

### Stand der Technik

Das Laden von Elektrofahrzeugen an öffentlichen Ladestationen ist in der Regel teurer als das Laden Zuhause. Vorteilhaft wäre es, wenn der Fahrer unterwegs nur genau so viel Energie laden würde, um noch nach Hause zu kommen und erst dann das Auto volllädt, beispielsweise an seiner Wallbox.

Dabei existieren jedoch folgende Probleme:
- Überwachung der geladenen Energiemenge bzw. Zeitdauer während des öffentlichen Ladevorgangs. Dazu gibt es nach dem Stand der Technik momentan zwei Möglichkeiten:
   1. In Apps zum Laden von Elektrofahrzeugen kann der Fahrer den Ladezustand des Elektrofahrzeugs und/oder die Zeitdauer überwachen.
   2. An der Ladestation, sofern diese über eine entsprechende Anzeige verfügt, kann die Energiemenge und/oder die Zeitdauer überwacht werden.
- Gemäß dem Stand der Technik gibt es weder eine automatische Überwachung noch eine automatische Beendigung des Ladevorgangs. In einer Situation, in der ein Fahrer auf dem Nachhauseweg noch Einkaufen geht und parallel etwas Energie nachladen muss, ist es nicht praktikabel den Einkauf nach einer Zeitspanne, also wenn die Energiemenge oder die Zeitdauer erreicht ist, zu unterbrechen, um den Ladevorgang an der Station manuell abzubrechen.

Das Dokument DE 10 2019 202 448 A1 offenbart eine Ladeeinrichtung zum Laden eines elektrischen Energiespeichers eines Kraftfahrzeugs.

Das Dokument DE 10 2019 128 084 A1 offenbart eine Ladekabel und eine damit kommunizierende Kommunikationsvorrichtung.

Es ist Aufgabe der vorliegenden Erfindung, den Stand der Technik weiter zu verbessern. Diese Aufgabe wird gelöst durch die Merkmale der unabhängigen Ansprüche.

### Offenbarung der Erfindung

### Vorteile der Erfindung

Die erfindungsgemäße Vorgehensweise mit den kennzeichnenden Merkmalen der unabhängigen Ansprüche weist demgegenüber den Vorteil auf, dass das Verfahren folgende Schritte umfasst:
a) Ermitteln mindestens einer Soll-Zeitgröße, welche eine durch den Nutzer mittels der App vorgebbare Zeit zum Starten und/oder Beenden eines Ladevorgangs repräsentiert;
b) Senden der Soll-Zeitgröße an das intelligente Ladekabel;
c) Fortlaufendes Erfassen einer Ist-Zeitgröße, welche eine Zeit während des Ladevorgangs repräsentiert, durch das intelligente Ladekabel;
d) Vergleichen der erfassten Ist-Zeitgröße mit der Soll-Zeitgröße;
e) Signalisieren der Ladestation und/oder dem elektrisch antreibbaren Fahrzeug durch das intelligente Ladekabel, dass der Ladevorgang beendet und/oder eine Ladeleistung auf einen vorgegebenen Wert, insbesondere einen Minimalwert, reduziert werden soll, in Abhängigkeit des Vergleichs.

Durch die Kombination von Ladeservices in einer App und einem intelligenten Ladekabel erhält der Nutzer vorteilhafterweise volle Kontrolle über den Ladevorgang und kann die Zeitdauer komfortabel steuern. Insbesondere wird weder der direkte Zugriff auf das Fahrzeug noch auf die Ladestation benötigt.

Für den Ladevorgang relevante Daten, welche momentan nur für die Ladestation oder für das elektrisch antreibbare Fahrzeug verfügbar sind, werden dem intelligenten Ladekabel verfügbar gemacht.

Weiter kann das intelligente Ladekabel für den Ladevorgang relevante Daten vorteilhafterweise an eine Betriebsinfrastruktur, beispielsweise ein Backend, übermitteln. Ferner kann die Betriebsinfrastruktur, beispielsweise das Backend, Steuersignale an das intelligente Ladekabel schicken. Damit kann das intelligente Ladekabel vorteilhafterweise den Ladevorgang steuern.

Vorteilhafterweise benötigt das intelligente Ladekabel keine separate Datenverbindung in das elektrisch antreibbare Fahrzeuge oder die Ladestation, da Steuersignale mit dem Fahrzeug und/oder der Ladestation über das intelligente Ladekabel ausgetauscht werden.

Ferner ist auch keine Verbindung mit einem Backend des Fahrzeugherstellers oder der Ladestation notwendig.

Weitere vorteilhafte Ausführungsformen sind Gegenstand der Unteransprüche.

Das erfindungsgemäße Verfahren zum Laden eines elektrochemischen Energiespeichers eines elektrisch antreibbaren Fahrzeugs mit einem intelligenten Ladekabel umfasst ferner folgenden Schritt:
f) Signalisieren dem elektrisch antreibbaren Fahrzeug durch das intelligente Ladekabel, dass der Ladevorgang beendet werden soll, in Abhängigkeit des Vergleichs in Schritt d).

Ferner umfasst das erfindungsgemäß Verfahren zum Laden eines elektrochemischen Energiespeichers eines elektrisch antreibbaren Fahrzeugs mit einem intelligenten Ladekabel folgenden Schritt:
g) Senden einer Benachrichtigung an den Nutzer durch das intelligente Ladekabel mittels der App, in Abhängigkeit des Vergleichs in Schritt d).

Das erfindungsgemäße Verfahren zum Laden eines elektrochemischen Energiespeichers eines elektrisch antreibbaren Fahrzeugs mit einem intelligenten Ladekabel umfasst weiter folgenden Schritt:
c.2) Senden der Ist-Zeitgröße an den Nutzer durch das intelligente Ladekabel mittels der App, um die bisherige Zeitdauer dem Nutzer optisch, akustisch und/oder haptisch auszugeben.

Vorteilhafterweise kann mittels einer Mehrzahl von Soll-Zeitgrößen ein zeitliches Ladeprofil vorgegeben werden.

Vorteilhafterweise wird die zu Soll-Zeitgröße anhand aktueller Energiepreise und maximalem Geldbetrag ermittelt.

Vorteilhafterweise kommunizieren das intelligente Ladekabel, das elektrisch antreibbare Fahrzeug, der elektrochemische Energiespeicher, die Ladestation und/oder eine Betriebsinfrastruktur kabelgebunden und/oder kabellos.

Ein erfindungsgemäßes intelligentes Ladekabel zum Laden eines elektrochemischen Energiespeichers, umfasset ein Mittel, insbesondere ein Steuergerät, welches eingerichtet ist, die Schritte des erfindungsgemäßen Verfahrens durchzuführen.

Vorteilhafterweise verhält sich das intelligente Ladekabel gegenüber dem elektrisch antreibbaren Fahrzeugs wie eine Ladestation und gegenüber der Ladestation wie ein elektrisch antreibbares Fahrzeug.

Weiter vorteilhafterweise werden Signale zwischen der Ladestation und dem elektrisch antreibbaren Fahrzeug nicht unmittelbar durchgereicht, sondern können durch das intelligente Ladekabel modifiziert werden, beispielsweise auf Grundlage vom Backend empfangener Steuersignale.

Vorteilhafterweise findet das erfindungsgemäße Verfahren zum Laden eines elektrochemischen Energiespeichers Verwendung für Elektrofahrzeuge, Brennstoffzellenfahrzeuge, Hybridfahrzeuge, Plug-In-Hybridfahrzeuge, Luftfahrzeuge, Pedelecs oder E-Bikes.

### Kurzbeschreibung der Zeichnungen

Ausführungsformen werden nachfolgend anhand der beigefügten Zeichnungen näher erläutert. Es zeigen:
- Figur 1: eine schematische Darstellung eines Ablaufdiagramms einer Ausführungsform eines erfindungsgemäßen Verfahrens; und
- Figur 2: eine schematische Darstellung einer Verwendung eines erfindungsgemäßen intelligenten Ladekabels.

Detaillierte Beschreibung der Ausführungsbeispiele Gleiche Bezugszeichen bezeichnen in allen Figuren gleiche Vorrichtungskomponenten.

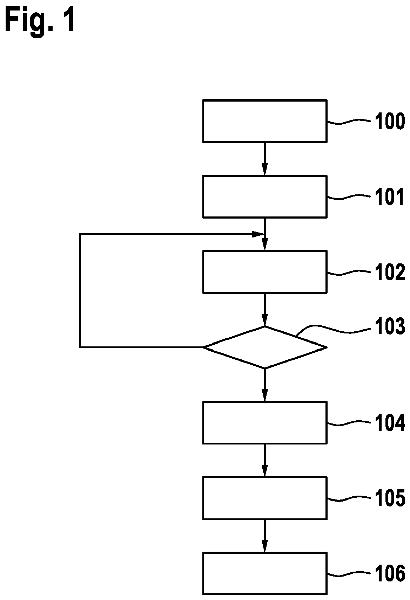

Figur 1 zeigt eine schematische Darstellung eines Ablaufdiagramms einer Ausführungsform eines erfindungsgemäßen Verfahrens. Ein Nutzer eines elektrisch antreibbaren Fahrzeugs hat beispielsweise ein Nutzerkonto bei einem Ladedienstleister zum Laden eines elektrochemischen Energiespeichers des elektrisch antreibbaren Fahrzeugs. Der Nutzer verwendet eine App des Ladedienstleisters für Ladevorgänge an Ladestationen, beispielsweise öffentliche Ladestationen. Ein intelligentes Ladekabel ist in der App als "Datenpartner" registriert, wodurch ein Datenaustausch zwischen dem intelligentes Ladekabel und der App direkt, beispielswiese mittels einer Funkverbindung wie WLAN, Bluetooth, oder indirekt, beispielsweise über ein oder mehrere Backends, möglich ist.

In Schritt 100 wird eine Soll-Zeitgröße ermittelt, welche eine durch den Nutzer des elektrisch antreibbaren Fahrzeugs mittels der App vorgebbare Zeit zum Starten und/oder Beenden eines Ladevorgangs repräsentiert. Die vorgebbare Zeit kann beispielsweise eine Uhrzeit und/oder Zeitspanne umfassen.

In Schritt 101 wird die Soll-Zeitgröße an das intelligentes Ladekabel gesendet.

In Schritt 102 wird eine Ist-Zeitgröße, welche eine Zeit während des Ladevorgangs repräsentiert, durch das intelligente Ladekabel fortlaufend erfasst.

In Schritt 103 wird die erfasste Ist-Zeitgröße mit der Soll-Zeitgröße verglichen.

In einer vorteilhaften Ausführungsform kann der Nutzer des elektrisch antreibbaren Fahrzeugs die Soll-Zeitgröße während des Ladevorgangs mittels der App ändern. Die neue Soll-Zeitgröße wird an das intelligente Ladekabel gesendet.

In Schritt 104 signalisiert das intelligente Ladekabel der Ladestation in Abhängigkeit des Vergleichs, dass der Ladevorgang beendet werden soll, beispielsweise wenn die Ist-Zeitgröße die Soll-Zeitgröße überschreitet.

Alternativ kann der Ladestation auch über das Backend des Ladedienstleisters signalisiert werden, dass der Ladevorgang beendet werden soll, weil das intelligente Ladekabel als "Datenpartner" registriert ist.

Die Ist-Zeitdauer wird damit vorteilhafterweise auf den vorgegebenen Wert der Soll-Zeitdauer begrenzt, ohne dass es eine weitere App benötigt wird und ohne dass der Nutzer des elektrisch antreibbaren Fahrzeugs die Zeitdauer während des Ladevorgangs überwacht und ohne dass der Ladevorgang aktiv beendet werden muss.

In Schritt 105 signalisiert das intelligente Ladekabel dem elektrisch antreibbaren Fahrzeug und/oder dem elektrochemischen Energiespeicher in Abhängigkeit des Vergleichs, dass der Ladevorgang beendet werden soll.

In einer alternativen Ausführungsform signalisiert das intelligente Ladekabel, dass eine Ladeleistung auf Null reduziert werden soll, wobei der Ladevorgang formal noch aktiv bleibt, oder dass die Ladeleistung auf einen Minimalwert größer Null gesetzt wird. Der Minimalwert orientiert sich vorteilhafterweise an öffentlichen Normen, beispielsweise einem minimalen Ladestrom von 6 A.

In Schritt 106 sendet das intelligente Ladekabel in Abhängigkeit des Vergleichs eine Benachrichtigung an den Nutzer mittels der App. Dadurch kann der Nutzer des elektrisch antreibbaren Fahrzeugs den Ladevorgang bei Rückkehr beenden, das intelligente Ladekabel ausstecken und einen neuen Fahrzyklus starten.

Ferner kann der Nutzer Energiepreise von Zuhause in der App hinterlegen, so dass zusammen mit einem aktuellen Energiepreis der öffentlichen Ladestation der monetäre Vorteil der Zeitprofile zum Laden dem Nutzer angezeigt wird. Dabei kann beispielsweise ein hypothetischer Vergleichswert angenommen werden, wenn der Ladevorgang nicht nach einer vorgegebenen Zeit bzw. Zeitdauer beendet worden wäre. Die Differenz zwischen hypothetischem Vergleichswert und realem Ladevorgang kann monetär mit dem Tarif der Energiepreise bei dem Nutzer Zuhause verglichen werden.

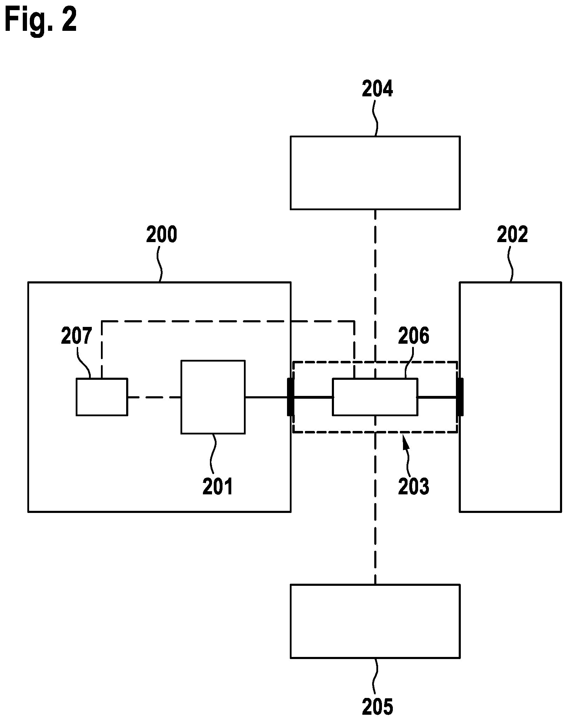

Figur 2 zeigt eine schematische Darstellung einer Verwendung eines erfindungsgemäßen intelligenten Ladekabels 203. Ein elektrisch antreibbares Fahrzeug 200 umfasst einen elektrochemischen Energiespeicher 201 und ein Steuergerät 207, beispielsweise ein Batteriemanagementsystem und/oder Ladesteuerungssystem. Der elektrochemische Energiespeicher 201 ist mittels eines intelligenten Ladekabels 203 mit einer Ladestation 202 elektromechanisch verbunden.

Das intelligente Ladekabel 203 umfasst ein Steuergerät 206 zur Datenerfassung und für eine Konnektivität. Das Steuergerät 206 des intelligenten Ladekabels 203, eine App 204, ein Backend 205 des intelligenten Ladekabels 203 sowie das Batteriemanagementsystem 207 des elektrochemischen Energiespeichers 201 kommunizieren in der dargestellten Ausführungsform kabellos.

## Patentansprüche

1. Verfahren zum Laden eines elektrochemischen Energiespeichers (201) eines elektrisch antreibbaren Fahrzeugs (200) mit einem intelligenten Ladekabel (203), welches eine Datenerfassung und eine Konnektivität aufweist, an einer Ladestation (202), wobei ein Nutzer des elektrisch antreibbaren Fahrzeugs eine App (204) des Ladedienstleisters für Ladevorgänge an Ladestationen verwendet, umfassend folgende Schritte:
a) (100) Ermitteln mindestens einer Soll-Zeitgröße, welche eine durch den Nutzer mittels der App (204) vorgebbare Zeit zum Starten und/oder Beenden eines Ladevorgangs repräsentiert;
b) (101) Senden der Soll-Zeitgröße an das intelligente Ladekabel (203);
c) (102) Fortlaufendes Erfassen einer Ist-Zeitgröße, welche eine Zeit während des Ladevorgangs repräsentiert, durch das intelligente Ladekabel (203);
d) (103) Vergleichen der erfassten Ist-Zeitgröße mit der Soll-Zeitgröße;
e) (104) Signalisieren der Ladestation (202) und/oder dem elektrisch antreibbaren Fahrzeug (200) durch das intelligente Ladekabel (203), dass der Ladevorgang beendet und/oder eine Ladeleistung auf einen vorgegebenen Wert reduziert werden soll, in Abhängigkeit des Vergleichs.

2. Verfahren zum Laden eines elektrochemischen Energiespeichers (201) eines elektrisch antreibbaren Fahrzeugs (200) mit einem intelligenten Ladekabel (203) gemäß Anspruch 1, ferner umfassend folgenden Schritt:
f) (105) Signalisieren dem elektrisch antreibbaren Fahrzeug (200) und/oder dem elektrochemischen Energiespeicher (201) durch das intelligente Ladekabel (203), dass der Ladevorgang beendet werden soll, in Abhängigkeit des Vergleichs in Schritt d).

3. Verfahren zum Laden eines elektrochemischen Energiespeichers (201) eines elektrisch antreibbaren Fahrzeugs (200) mit einem intelligenten Ladekabel (203) gemäß einem der vorhergehenden Ansprüche, ferner umfassend folgenden Schritt:
g) (106) Senden einer Benachrichtigung an den Nutzer durch das intelligente Ladekabel (203) mittels der App (204), in Abhängigkeit des Vergleichs in Schritt d).

4. Verfahren zum Laden eines elektrochemischen Energiespeichers (201) eines elektrisch antreibbaren Fahrzeugs (200) mit einem intelligenten Ladekabel (203) gemäß einem der vorhergehenden Ansprüche, ferner umfassend folgenden Schritt:
c.2) Senden der Ist-Zeitgröße an den Nutzer durch das intelligente Ladekabel (203) mittels der App (204), um die bisherige Zeitdauer dem Nutzer optisch, akustisch und/oder haptisch auszugeben.

5. Verfahren zum Laden eines elektrochemischen Energiespeichers (201) eines elektrisch antreibbaren Fahrzeugs (200) mit einem intelligenten Ladekabel (203) gemäß einem der vorhergehenden Ansprüche, wobei mittels einer Mehrzahl von Soll-Zeitgrößen ein zeitliches Ladeprofil vorgegeben werden kann.

6. Verfahren zum Laden eines elektrochemischen Energiespeichers (201) eines elektrisch antreibbaren Fahrzeugs (200) mit einem intelligenten Ladekabel (203) gemäß einem der vorhergehenden Ansprüche, wobei die Soll-Zeitgröße anhand aktueller Energiepreise und maximalem Geldbetrag ermittelt wird.

7. Verfahren zum Laden eines elektrochemischen Energiespeichers (201) eines elektrisch antreibbaren Fahrzeugs (200) mit einem intelligenten Ladekabel (203) gemäß einem der vorhergehenden Ansprüche, wobei das elektrisch antreibbare Fahrzeug (200), der elektrochemische Energiespeicher (201), die Ladestation (202), das intelligente Ladekabel (203), eine Betriebsinfrastruktur (205) und/oder ein Batteriemanagementsystem (207) des elektrochemischen Energiespeichers (201) kabelgebunden und/oder kabellos kommunizieren.

8. Intelligentes Ladekabel (203) zum Laden eines elektrochemischen Energiespeichers (201), umfassend ein Mittel (206), insbesondere ein Steuergerät, welches eingerichtet ist, die Schritte des Verfahrens nach einem der Ansprüche 1 bis 7 durchzuführen.

9. Verwendung eines Verfahrens zum Laden eines elektrochemischen Energiespeichers (201) gemäß einem der Ansprüche 1 bis 7 für Elektrofahrzeuge, Brennstoffzellenfahrzeuge, Plug-In-Hybridfahrzeuge, Luftfahrzeuge, Pedelecs oder E-Bikes.
